# EUROPÄISCHE PATENTSCHRIFT

(11) **EP 0 686 784 B1**
(45) Veröffentlichungstag und Bekanntmachung des Hinweises auf die Patenterteilung: **12.04.2000**
(21) Anmeldenummer: 95102566.7
(22) Anmeldetag: 23.02.1995
(51) Int. Cl.: F16C 29/04

(54) **Linearführung**
Linear guide
Palier linéaire

(30) Priorität: 10.05.1994 DE 4416459
(43) Veröffentlichungstag der Anmeldung: 13.12.1995
(73) Patentinhaber: SCHÜCO International KG, 33609 Bielefeld (DE)
(72) Erfinder: Hettwer, Guido, Dipl. Ing., D-49086 Osnabrück (DE); Diekmann, Bernd, Dipl. Ing., D-33790 Halle (DE)
(74) Vertreter: Stracke, Alexander, Dipl.-Ing.

(56) Entgegenhaltungen:
- FR-A- 2 545 030
- US-A- 4 944 608

## Beschreibung

Die Erfindung bezieht sich auf eine Linearführung mit einem Profilträger, der mit in Längsrichtung verlaufenden Nuten versehen ist, und mit einer an dem Profilträger über Rollen angreifenden Rollenführung, wobei der Profilträger gegenüber der Rollenführung und/oder umgekehrt verschiebbar ausgebildet ist, die Rollen eine Ringnut mit einer ersten Ringnutfläche und einer zweiten Ringnutfläche aufweisen, die unmittelbar an dem Profilträger anliegen und wobei die erste Ringnutfläche sich an einem Außenflächenbereich des Profilträgers abstützt.

Es ist eine Linearführung dieser Art bekannt (FR-A-2 545 030), bei der ein Profilträger mit quadratischem Querschnitt zur Führung eines Schlittens benutzt wird. Die Ringnutenflächen der Rollen stützen sich ausschließlich an Außenflächen des Profilträgers ab, die zwei diagonal gegenüberliegende Ecklinien des Profilträgers bilden. Hierdurch ergibt sich ein großes Baumaß für die Linearführung.

Die bekannte Anordnung ist auf einen in der beschriebenen Art orientierten Profilträger mit quadratischem Querschnitt beschränkt, so daß konstrvktive Abwandlungen der Linearführung weitgehend unterbunden werden.

Der Erfindung liegt die Aufgabe zugrunde, eine Linearführung der eingangs genannten Art derart weiterzubilden, daß sich eine einfache Konstruktion und Anordnung der Rollenführung als auch ein entsprechend geringeres Baumaß ergibt.

Diese Aufgabe wird durch die Merkmale des Patentanspruches 1 gelöst.

Die Rollen stützen sich an Flächen des Profilträgers im Bereich der hinterschnittenen Nuten ab.

Bei der Erfindungsgemäßen Linearführung bleibt der Profilträger an mindestens einer Seite frei, so daß an dieser Seite Abstützungen des Profilträgers vorgenommen werden können.

Zusätzliche Vorteile und Merkmale ergeben sich aber auch aus der folgenden Beschreibung mehrerer Ausführungsformen der Erfindung im Zusammenhang mit der Zeichnung. Es zeigen:
- Figur 1 und 2: jeweils eine prinzipielle Darstellung einer Linearführung mit Rollenführung und Profilträger;
- Figur 3: eine perspektivische Darstellung einer Linearführung gemäß einer ersten Ausführungsform;
- Figur 4: eine perspektivische Darstellung einer Linearführung gemäß einer zweiten Ausführungsform;
- Figur 5: eine Querschnittsansicht einer Linearführung gemäß einer dritten Ausführungsform;
- Figur 6: eine Querschnittsansicht einer Linarführung gemäß einer vierten Ausführungsform;
- Figur 7 und 8: zwei Querschnittsansichten einer Linearführung gemäß einer fünften Ausführungsform; und
- Figur 9 und 10: zwei Querschnittsansichten einer Linearführung gemäß einer sechsten Ausführungsform.

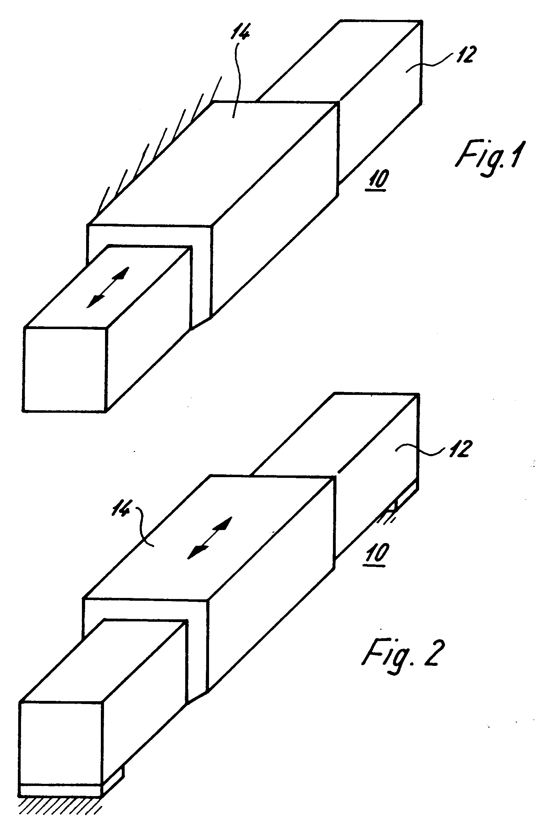

In den Figuren 1 bis 10 ist jeweils eine Linearführung 10 dargestellt, die aus einem Profilträger 12 und einer Rollenführung 14 besteht. Da die Rollenführung 14 und der Profilträger 12 der Linearführungen 10 der unterschiedlichen Ausführungsformen jeweils die gleichen Funktionen haben, sind sie mit denselben Bezugszeichen versehen.

In den Figuren 1 und 2 sind die beiden prinzipiellen Möglichkeiten einer Relativbewegung zwischen dem Profilträger 12 und der Rollenführung 14 dargestellt. Nach Figur 1 ist die Rollenführung 14 fest angeordnet und der Profilträger 12 in der Rollenführung 14 verschiebbar gelagert. Gemäß der Figur 2 ist der Profilträger 12 fest angeordnet und die Rollenführung 14 auf dem Profilträger 12 verschiebbar gelagert.

Solche Linearführungen 10 werden für vielfältige Einsatzbereiche benötigt, beispielsweise als Führung für einen Roboterarm, als Schlitten für eine Greifeinrichtung oder ähnliches. Dafür ist es wichtig, daß die bewegten Massen so klein wie möglich gehalten werden und eine gute Montierbarkeit gegeben ist. Unter anderem sind dafür in den Profilträger 12 Nuten 16 eingebracht.

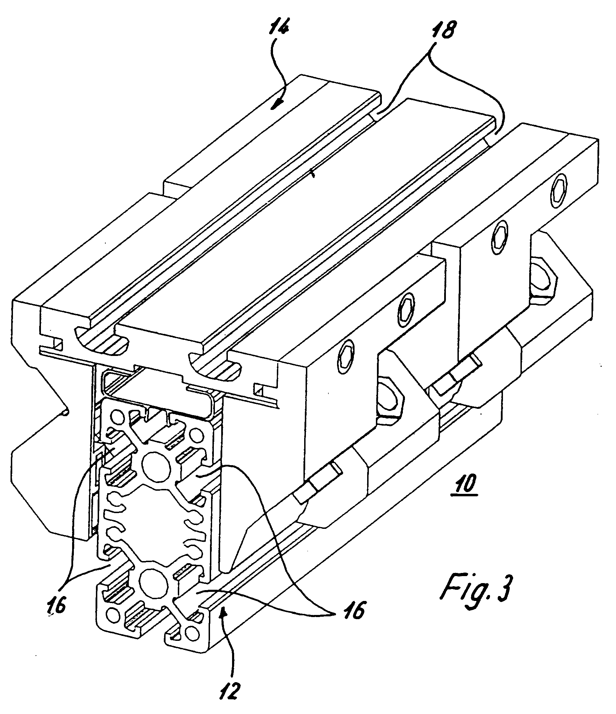

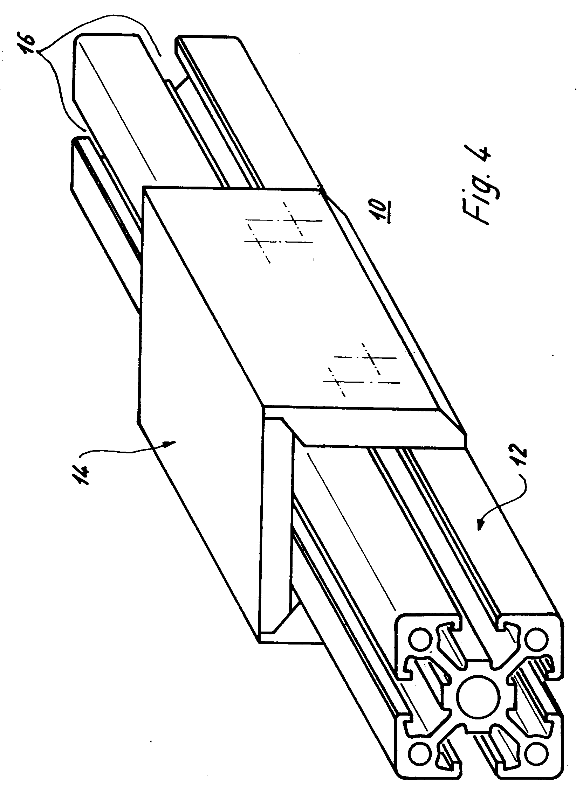

Wie deutlich den Figuren 3 und 4 zu entnehmen ist, ist die Rollenführung 14 gemäß den in diesen Figuren dargestellten Ausführungsformen im Querschnitt U-förmig ausgebildet und umgreift den Profilträger 12.

Die in den Figuren 1 bis 10 dargestellten Profilträger 12 sind im Querschnitt jeweils rechteckig ausgeführt. Sie können aber ebenso gut im Querschnitt als Polygon kreisförmig, oval oder entsprechend anders verrundet ausgebildet sein.

Die Rollenführung 14 nach der Ausführungsform von Figur 3 weist an seiner oberen Seite zwei zueinander parallel verlaufende sowie hinterschnittene Nuten 18 auf, die in bekannter Weise zur Befestigung weiterer Bauteile bzw. Maschinenteile dienen.

Anhand der Figuren 5 bis 10, die weitere Ausführungsformen der erfindungsgemäßen Linearführung 10 darstellen, wird die prinzipielle Führung zwischen der Rollenführung 14 und dem Profilträger 12 verdeutlicht.

Nach der Ausführungsform von Figur 5 ist der Rollenträger 14 mit über vier jeweils zwei nebeneinander angeordneten über Kugellager 20 drehbar gelagerte Rollen 22 und 24 auf dem Profilträger 12 gelagert. Die Drehachsen der im Querschnitt dargestellten Rollen 22 und 24 sind in einer Ebene angeordnet und greifen in zueinander entgegengesetzte Richtungen an den Profilträger 12 an. Aus diesem Grunde sind die Drehachsen der beiden Rollen 22 und 24 parallel ausgerichtet.

Die Rollen 22 und 24 sind jeweils mit einem in eine Bohrung der Rolenführung 14 eingreifenden Zapfen 26 versehen, der an seinem freien Ende ein Gewinde aufweist. Auf das Gewinde ist eine Schraube 28 aufgeschraubt, so daß über die Schraube 28 und den Zapfen 26 im Zusammenwirken mit der Bohrung der Rollenfhrung 14 die Rollen 22, 24 in der Rollenführung 14 befestigt sind.

Der Profilträger 12 ist im Querschnitt rechteckig ausgebildet und weist an jeder Seite eine Nut 16 auf. Durch die Nuten 16 sind jeweils zwei zueinander rechtwinklig angeordnete Flächenbereiche 30 und 32 gebildet, nämlich ein erster Außenflächenbereich 30 und ein zweiter, Zum Nutinneren ausgerichteter Flächenbereich 32. Der Übergang zwischen dem ersten Außenflächenbereich 30 und dem angrenzenden zweiten Flächenbereich 32 ist verrundet.

Die Rollen 22 und 24 weisen jeweils eine Ringnut 34 mit einer ersten Ringnutfläche 36 und einer zweiten Ringnutfläche 38 auf, die zueinander senkrecht ausgerichtet sind. Der Übergang zwischen der ersten Ringnutfläche 36 und der zweiten Ringnutfläche 38 ist ebenfalls verrundet. Die Rollen 22 und 24 greifen diametral gegenüberliegend an die Flächen 30, 32 des Profilträgers 12 an. Dafür sind sie in einer Ebene angeordnet und die zur Drehachse senkrechte Mittelebene der Rollen 22 und 24 liegt in der Winkelhalbierenden zwischen dem ersten und dem zweiten Flächenbereich 30 und 32 des Profilträgers 12.

Die Nuten 16 sind dafür mittig zu den Seitenflächen des rechteckigen Profilträgers 12 sowie symmetrisch und parallel zur Längsachse in den Profilträger 12 eingebracht.

Der erste Außenflächenbereich 30 ist in bezug auf den zweiten Außenflächenbereich 32 rechteckig angeordnet. Durch die rechteckige Anordnung der ersten Nutfläche 36 in bezug auf die zweite Nutfläche 38 sind die Rollen 22 und 24 jeweils für die Anlage an den genannten Flächenbereichen 30 und 32 angepaßt. Da nun auf der einen Seite die beiden Außenflächenbereiche 30 und 32 rechtwinklig zueinander angeordnet sind und auf der anderen Seite die Mittelebene der Rollen 22 und 24 in der Ebene der Winkelhalbierenden und die Ringnut 34 an die beiden Flächen 30 und 32 angepaßt ist, liegt die Mittelebene der Rollen 22 und 24 in einem Winkel von 45° zu dem ersten Flächenbereich 30 bzw. zu dem zweiten Flächenbereich 32.

In der Figur 5 sind zwei Pfeile X und Y dargestellt, wobei der Pfeil X von links nach rechts und der Pfeil Y von oben nach unten verläuft. Entsprechend dieser die Wirkrichtungen darstellenden Pfeile X und Y ist die Rollenführung 14 auf dem Profilträger 12 und/oder umgekehrt geführt. Die Flächenbereiche 32 und die zugeordneten Nutflächen 38 bilden somit eine Führung entsprechend der Wirkrichtung des Pfeiles Y und die Außenflächenbereiche 30 sowie die zugeordneten Nutflächen 36 bilden eine Führung entsprechend der Wirkrichtung des Pfeiles X.

Die Rollenführung 14 ist somit fest auf dem Profilträger 12 angeordnet und kann längs des Profilträgers 12 durch Abrollen der Rollen 22 und 24 verfahren werden. Damit die Rollenführung 14 sicher auf dem Profilträger 12 angeordnet ist, sind neben den Rollen 22 und 24 in Längsrichtung des Profilträgers 12 versetzt - wie oben erwähnt - weitere Rollen 22 und 24 in derselben Weise, wie in Figur 5 dargestellt, angeordnet, so daß der Profilträger 12 auf insgesamt vier Rollen 22, 24 gelagert ist. Es dürfte klar sein, daß je nach Ausbildung und Beanspruchung der Rollenführung 14 auch noch weitere Rollen 22, 24 in der Rollenführung 14 vorgesehen sein können.

Diese Anordnung hat den Vorteil, daß die in X- oder Y-Richtung wirkenden Lagerkräfte immer die gleiche Lagerbeanspruchung an den Rollen 22 und 24 hervorrufen. Dies hat den Vorteil, daß die systemmäßig festgelegten Tragzahlen solcher Linearführungen 10 - unabhängig von der Lasteinleitung - grundsätzlich gleich sind.

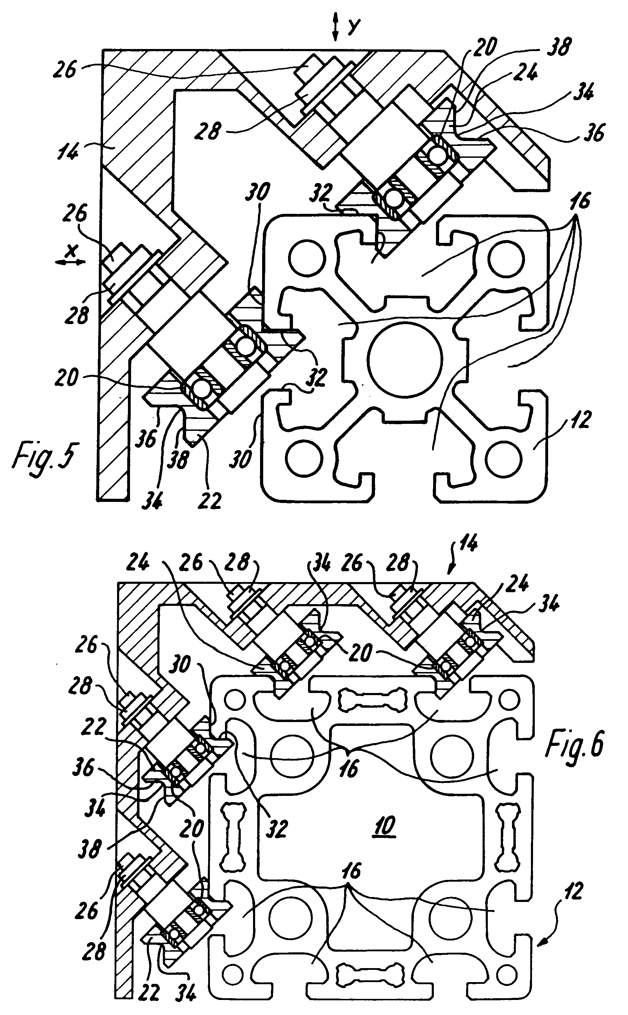

In der Figur 6 ist eine weitere Ausführungsform der Erfindung dargestellt. Der Profilträger 12 weist nunmehr je Seitenfläche zwei in Längsrichtung des Profilträgers 12 verlaufende Nuten 16 auf, wie der Querschnittsdarstellung deutlich zu entnehmen ist. Vom Prinzip her ist diese Ausführungsform entsprechend der Ausführungsform von Figur 5 aufgebaut. Lediglich sind zwei Nuten 16 pro Seitenfläche und entsprechend mehr Rollen 22, 24 vorgesehen. Ansonsten sind die Rollen 22 und 24 entsprechend wie bei der Ausführungsform von Figur 5 zueinander ausgerichtet, ausgebildet und greifen in entsprechender Weise an die ersten und zweiten Flächenbereiche 30 und 32 an. Die Drehachsen dieser Rollen 22, 24 sind alle parallel, wobei es klar sein dürfte, daß die Rollen 22, 24 in bezug auf die Längsachse auch beabstandet zueinander angeordnet sein können.

Bei der vorliegenden Ausführungsform sind aber in bezug auf die Längsachse des Profilträgers 12 neben den hier im Schnitt dargestellten vier Rollen 22 und 24 beabstandet zu diesen noch einmal vier Rollen 22 und 24 vorgesehen. Die Rollenführung 14 ist somit für größere Belastungen als die Rollenführung 14 nach der Figur 5 ausgebildet.

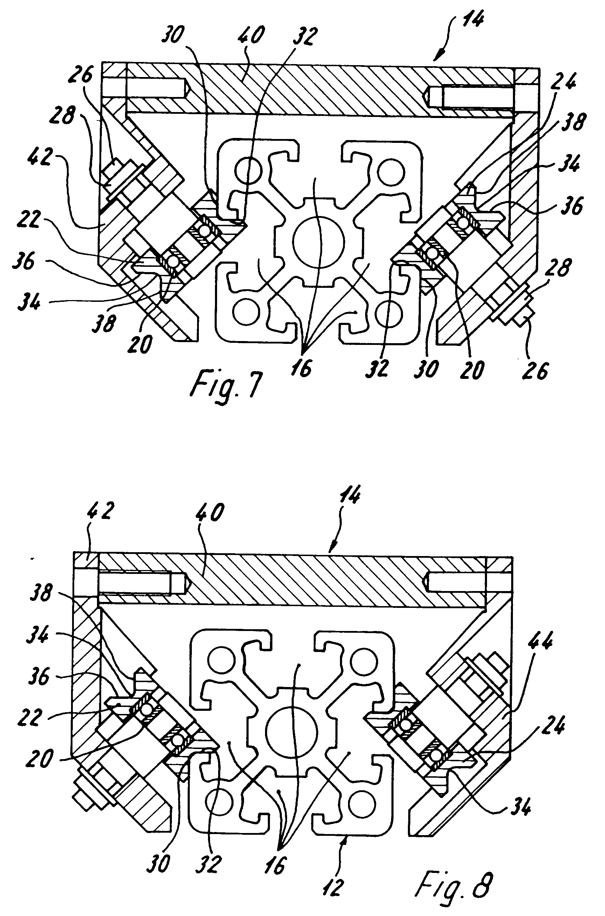

Die Figuren 7 und 8 zeigen zwei Schnitte durch eine weitere Ausführungsform einer Linearführung 10, wobei der Profilträger 12 entsprechend der Ausführungsform von Figur 5 ausgebildet ist. Die Rollen 22 und 24 der Rollenführung 14 greifen dabei an zwei zueinander entfernt gelegenen Seiten des rechteckigen Profilträgers 12 an. Zwar ist die Richtung, in der sie an den Profilträger 12 nach Figur 7 bzw. Figur 8 angreifen, zueinander entgegengesetzt, die Mittelebene der Rollen 22 und 24 zueinander jeweils parallel, die Rollen 22 und 24 liegen aber nicht in derselben Ebene, sondern sind zueinander beabstandet angeordnet. Die entsprechend umgekehrte Anordnung der Rollen 22, 24 zeigt jeweils die Figur 7 bzw. die Figur 8. Die Drehachsen der Laufrollen 22 und 24 nach Figur 7 auf der einen Seite und Figur 8 auf der anderen Seite liegen jeweils in einer Ebene, wobei die Figur 7 und die Figur 8 zwei benachbart zueinander verlaufende Querschnitte zeigen. Die in den Figuren 7 und 8 dargestellte Anordnung der Rollen 22 und 24 ist jeweils bei beiden Endbereichen der Rollenführung 14 vorgesehen. Somit weist die Rollenführung 14 acht Laufrollen auf, nämlich jeweils zwei Laufrollenpaare gemäß Figur 7 und zwei Laufrollenpaare gemäß Figur 8.

Entsprechend den anderen Ausführungsformen sind die Rollen 20, 24 ausgebildet und in der Rollenführung 14 befestigt. Die Rollenführung 14 besteht bei dieser Ausführungsform aus einer Platte 40 sowie zwei Seitenteilen 42 und 44, an denen jeweils die Rollen 22 bzw. 24 angeschraubt sind. Die Seitenteile 42 und 44 snd jeweils mit der Platte 40 verschraubt.

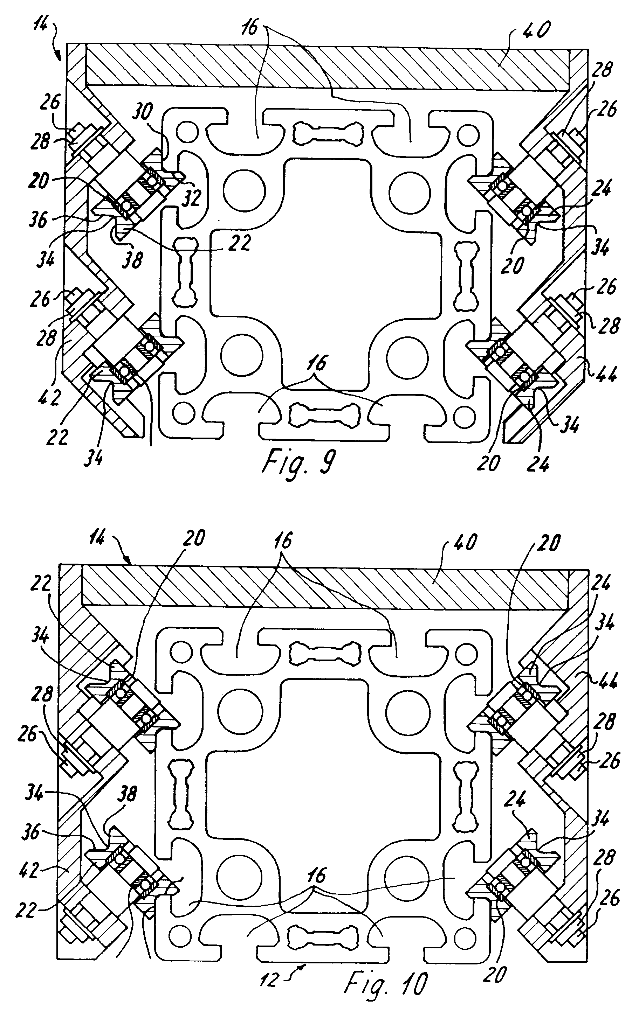

Eine weitere Ausführungsform der Erfindung ist in den Figuren 9 und 10 dargestellt. Prinzipiell sind die Rollen 22 und 24 entsprechend der Ausführungsform nach den Figuren 7 und 8 angeordnet, wie sich aus dem Folgenden ergibt.

Der Profilträger 12 entspricht dem Profilträger 12 nach der Ausführungsform von Figur 6 und weist somit auf jeder Seite zwei Längsnuten 16 auf. Die Figur 9 und die Figur 10 zeigen wiederum zwei benachbarte Querschnitte durch die Linearführung 10, wobei auf jeder Seite nunmehr zwei Rollen 22, 24 im Schnitt an den Profilträger 12 angreifen. Die in den Figuren 9 und 10 im Schnitt dargestellten Rollen 22 und 24 sind jeweils untereinander angeordnet. Ansonsten ist die Rollenführung 14 entsprechend der Ausführungsform der Figuren 7 und 8 ausgeführt. Somit weist diese Ausführungsform insgesamt sechzehn Laufrollen und acht Laufrollenpaare 22 und 24 sowie jeweils zwei Anordnungen gemäß der Figur 9 und gemäß der Figur 10 auf, wobei die Anordnungen nach Figur 9 und 10 jeweils bei den Endbereichen der Rollenführung 14 vorgesehen ist.

Die Anordnung der Laufrollen 22 und 24 in den jeweiligen Schnittdarstellungen 9 und 10 ist nicht zwingend. Die Rollen 22, 24 können gemäß einer alternativen Ausführung nach Figur 9 alle nach oben bzw. nach unten gerichtet sein, während die Rollen 22 und 24 nach Figur 10 alle nach unten bzw. nach oben gerichtet sein können. Es ist lediglich sicherzustellen, daß den aufwärts gerichteten Rollen 22 und 24 entsprechend abwärts gerichtete Rollen 20 und 24 entgegenstehen, um eine eindeutige Führung der Rollenführung 14 bzw. des Profilträgers 12 zu garantieren.

Der in den Figuren 9 und 10 dargestellte Profilträger 12 mit der Rollenführung 14 und der Anordnung der Rollen 22 und 24 kann dem erfindungsgemäßen Prinzip folgend vielfältig ausgestaltet werden. Je nach Anforderung können weitere Nuten 16 zur zusätzlichen Anordnung von Rollen 22 und 24 in den Profilträger 12 eingebracht sein.

Als von Vorteil hat sich erwiesen, daß die Rollen 22 und 24 in einem Winkel von 45° zum ersten und/oder zweiten Außenflächenbereich 30, 32 ausgerichtet sind. Insbesondere wird dadurch erreicht, daß die Linearführung 10, insbesondere die Rollenführung 14 möglichst klein baut. Geht man von den Außenmaßen der Rollenführung 14 aus und würden die Rollen 22, 24 senkrecht zu den Flächenbereichen 30, 32 des Profilträgers 12 angeordnet sein, so würden sich die Maße der Rollenführung 14 pro Seitnfläche um den Faktor Wurzel aus 2 des Rollendurchmessers vergrößern. Neben den gleichen Lastfällen bei Kraftangriff in unterschiedliche Achsrichtungen ist mithin auch das Problem gelöst, bei optimaler Größe der Rollen 22 und 24 eine möglichst kleine Ausbildung der Rollenführung bzw. der Linearführung 10 zu gewährleisten.

### Bezugszeichen

- 10: Linearführung
- 12: Profilträger
- 14: Rollenführung
- 16: Nute/Profilträger
- 18: Nute/Rollenführung
- 20: Kugellager
- 22: Rollen
- 24: Rollen
- 26: Zapfen
- 28: Schraube
- 30: erster Außenflächenbereich
- 32: zweiter, zum Nutinneren ausgerichteter Flächenbereich
- 34: Ringnut
- 36: Nutfläche
- 38: Nutfläche
- 40: Platte
- 42: Seitenteil
- 44: Seitenteil

## Patentansprüche

1. Linearführung (10) mit einem Profilträger (12), der mit in Längsrichtung verlaufenden Nuten (16) versehen ist, und mit einer an dem Profilträger (12) über Rollen (22,24) angreifenden Rollenführung (14), wobei der Profilträger (12) gegenüber der Rollenführung (14) und/oder umgekehrt verschiebbar ausgebildet ist, die Rollen eine Ringnut (34) mit einer ersten Ringnutfläche (36) und einer zweiten Ringnutfläche (38) aufweisen, die unmittelbar an dem Profilträger (12) anliegen und wobei die erste Ringnutfläche (36) sich an einem Außenflächenbereich (30) des Profilträgers (12) abstützt, **dadurch gekennzeichnet, daß** die Rollen (22,24) mit ihrer Ringnut (34) teilweise in die Nuten (16) des Profilträgers (12) eingreifen, indem die zweite Ringnutfläche (38) sich jeweils an einen den Längsrand der Nut (16) bildenden, zum Nutinneren ausgerichteten Flächenbereich (32) abstützt, der an den Außenflächenbereich angrenzt und zu diesem im Winkel angeordnet ist.

2. Linearführung nach Anspruch 1, dadurch gekennzeichnet, daß zumindest zwei Rollen (22,24) zueinander parallel angeordnet sind.

3. Linearführung nach Anspruch 2, dadurch gekennzeichnet, daß zumindest zwei Rollen (22,24) in zueinander entgegengesetzte Richtungen an den Profilträger (12) angreifen.

4. Linearführung nach Anspruch 3, dadurch gekennzeichnet, daß zumindest zwei Rollen (22,24) an zwei diametral gegenüberliegenden ersten und zweitens Aufenflächen- bzw. Flächenbereichen (30,32) des Profilträgers (12) anliegen.

5. Linearführung nach Anspruch 2, dadurch gekennzeichnet, daß zumindest zwei Rollen (2,24) in zueinander gleichen Richtungen an dem Profilträger (12) angreifen.

6. Linearführung nach einem der vorangehenden Ansprüche, dadurch gekennzeichnet, daß die Drehachsen von zumindest zwei Rollen (22,24) in einer Ebene liegen.

7. Linearführung nach Anspruch 1, dadurch gekennzeichnet, daß der erste und zweite Außenflächen- bzw. Flächenbereich (30,32) in einem Winkel von 90° zueinander angeordnet sind.

8. Linearführung nach einem der vorangehenden Ansprüche, dadurch gekennzeichnet, daß zumindest zwei Rollen (22,24) rechtwinklig zueinander angeordnet sind und in entsprechender Richtung dieser Anordnung an den Profilträger (12) angreifen.

9. Linearführung nach einem der vorangehenden Ansprüche, dadurch gekennzeichnet, daß der Profilträger (12) im Querschnitt rechteckig ausgeführt ist.

10. Linearführung nach Anspruch 9, dadurch gekennzeichnet, daßjede Seite des Profilträgers (12) zumindest eine Nut (16) aufweist.

11. Linearführung nach Anspruch 9 oder 10, dadurch gekennzeichnet, daß die Rollenführung (14) zumindest an zwei Seiten des Profilträgers (12) angreift.

12. Linearführung nach Anspruch 11, dadurch gekennzeichnet, daß die Rollenführung (14) im Querschnitt U-förmig ausgebildet ist.

13. Linearführung nach Anspruch 1, dadurch gekennzeichnet, daß die zur Drehachse senkrechte Mittelebene der Rolle (22,24) parallel zur Ebene der Winkelhalbierenden zwischen der ersten und zweiten Außenfläche bzw. Fläche (30,32) des Profilträgers (12) ausgerichtet ist.

14. Linearführung nach Anspruch 13, dadurch gekennzeichnet, daß die Mittelebene der Rolle (22,24) in der Ebene der Winkelhalbierenden liegt.

## Claims

1. A linear guide (10) comprising a shaped bearer (12) provided with grooves (16) extending in the longitudinal direction, and a roller guide (14) which engages the shaped bearer (12) by way of rollers (22, 24). wherein the shaped bearer (12) is designed to be displaceable with respect to the roller guide (14) and/or vice-versa, the rollers have an annular groove (34) with a first annular groove surface (36) and a second annular groove surface (38) which bear directly against the shaped bearer (12), and wherein the first annular groove surface (36) is supported at an outside surface region (30) of the shaped bearer (12), characterised in that the rollers (22, 24) partially engage with their annular groove (34) into the grooves (16) of the shaped bearer (12) by the second annular groove surface (38) being respectively supported at a surface region (32) which forms the longitudinal edge of the groove (16) and which is directed towards the interior of the groove and which adjoins the outside surface region and which is arranged at an angle with respect thereto.

2. A linear guide according to claim 1 characterised in that at least two rollers (22, 24) are arranged in mutually parallel relationship.

3. A linear guide according to claim 2 characterised in that at least two rollers (22, 24) engage the shaped bearer (12) in mutually opposite directions.

4. A linear guide according to claim 3 characterised in that at least two rollers (22, 24) bear against two diametrally oppositely disposed first and second outside surfaces or surface regions (30, 32) of the shaped bearer (12).

5. A linear guide according to claim 2 characterised in that at least two rollers (22, 24) engage the shaped bearer (12) in the same directions as each other.

6. A linear guide according to one of the preceding claims characterised in that the axes of rotation of at least two rollers (22, 24) lie in one plane.

7. A linear guide according to claim 1 characterised in that the first and second outside surfaces or surface region (30, 32) are arranged at an angle of 90° relative to each other.

8. A linear guide according to one of the preceding claims characterised in that at least two rollers (22, 24) are arranged at a right angle to each other and engage the shaped bearer (12) in the corresponding direction of that arrangement.

9. A linear guide according to one of the preceding claims characterised in that the shaped bearer (12) is of a rectangular configuration in cross-section.

10. A linear guide according to claim 9 characterised in that each side of the shaped bearer (12) has at least one groove (16).

11. A linear guide according to claim 9 or claim 10 characterised in that the roller guide (14) engages at least two sides of the shaped bearer (12).

12. A linear guide according to claim 11 characterised in that the roller guide (14) is of a U-shaped configuration in cross-section.

13. A linear guide according to claim 1 characterised in that the central plane of the roller (22, 24), which is perpendicular to the axis of rotation, is oriented parallel to the pane of the basector between the first and second outside surfaces or surfaces (30, 32) of the shaped bearer (12).

14. A linear guide according to claim 13 characterised in that the central plane of the rollers (22, 24) lies in the plane of the bisector.

## Revendications

1. Palier linéaire (10) comprenant un support profilé (12), pourvu de rainures (16) s'étendant dans la direction longitudinale, et comprenant un palier à galets (14) s'appliquant sur le support profilé (12) au moyen de galets (22, 24), le support profilé (12) étant conçu pour pouvoir être déplacé par rapport au palier à galets (14) et/ou inversement, les galets présentant une gorge annulaire (34) avec une première surface de gorge annulaire (36) et une deuxième surface de gorge annulaire (38) qui reposent directement sur le support profilé (12), et la première surface de gorge annulaire (36) s'appuyant sur une zone de surface extérieure (30) du support profilé (12), **caractérisé en ce que** les galets (22, 24), par leur gorge annulaire (34) pénètrent partiellement dans les rainures (16) du support profilé (12), dans la mesure où la deuxième surface de gorge annulaire (38) s'appuie chaque fois sur une zone de surface (32), formant le bord longitudinal de la rainure (16), et orientée vers l'intérieur de la rainure, zone qui est contigüe à la zone de surface extérieure et qui forme un angle par rapport à celle-ci.

2. Palier linéaire selon la revendication 1, caractérisé en ce qu'au moins deux galets (22, 24) sont montés parallèlement l'un à l'autre.

3. Palier linéaire selon la revendication 2, caractérisé en ce qu'au moins deux galets (22, 24) s'appliquent sur le support profilé (12), dans des directions opposées l'une à l'autre,

4. Palier linéaire selon la revendication 3, caractérisé en ce qu'au moins deux galets (22, 24) sont placés sur des premières et deuxièmes zones de surface ou zones de surface extérieure (30, 32), diamétralement opposées, du support profilé (12).

5. Palier linéaire selon la revendication 2, caractérisé en ce qu'au moins deux galets (22, 24) s'appliquent sur le support profilé (12), dans des directions identiques.

6. Palier linéaire selon l'une des revendications précédentes, caractérisé en ce que les axes de rotation d'au moins deux galets (22, 24) sont situés dans un même plan.

7. Palier linéaire selon la revendication 1, caractérisé en ce que la première et la deuxième zones de surface ou zones de surface extérieure (30, 32) forment un angle de 90° l'une par rapport à l'autre.

8. Palier linéaire selon l'une des revendications précédentes, caractérisé en ce qu'au moins deux galets (22, 24) forment un angle droit entre eux et, dans la direction correspondante de cette conformation, s'appliquent sur le support profilé (12).

9. Palier linéaire selon l'une des revendications précédentes, caractérisé en ce que le support profilé (12) présente une section transversale rectangulaire.

10. Palier linéaire selon la revendication 9, caractérisé en ce que chaque côté du support de palier (12) présente au moins une rainure (16).

11. Palier linéaire selon la revendication 9 ou 10, caractérisé en ce que le palier à galets (14) s'applique au moins sur deux côtés du support profilé (12).

12. Palier linéaire selon la revendication 11, caractérisé en ce que le palier à galets (14) présente une section transversale en forme de U.

13. Palier linéaire selon la revendication 1, caractérisé en ce que le plan médian du galet (22, 24), perpendiculaire à l'axe de rotation, est parallèle au plan de la bissectrice entre la première et la deuxième surface extérieure ou surface (30, 32) du support profilé (12).

14. Palier linéaire selon la revendication 13, caractérisé en ce que le plan médian du galet (22, 24) se trouve dans le plan de la bissectrice.
